# EUROPÄISCHE PATENTSCHRIFT

(11) **EP 3 593 443 B1**
(45) Veröffentlichungstag und Bekanntmachung des Hinweises auf die Patenterteilung: **21.06.2023**
(21) Anmeldenummer: 18705874.8
(22) Anmeldetag: 13.02.2018
(51) Int. Cl.: H02K 3/52, H02K 3/32

(54) **ENDPLATTE FÜR EINEN STATOR EINER ELEKTRISCHEN MASCHINE**
END PLATE FOR A STATOR OF AN ELECTRIC MACHINE
PLAQUE D'EXTRÉMITÉ POUR STATOR D'UN MOTEUR ÉLECTRIQUE

(30) Priorität: 07.03.2017 DE 102017203681
(43) Veröffentlichungstag der Anmeldung: 15.01.2020
(73) Patentinhaber: Robert Bosch GmbH, 70442 Stuttgart (DE)
(72) Erfinder: FEDER, Elmar, 71229 Leonberg (DE); EISELE, Frank, 72631 Aichtal (DE); WELLER, Friedbert, 70794 Filderstadt (DE); MOLDENHAUER, Dirk, 71111 Waldenbuch (DE); ELSAESSER, Ortwin, 71701 Schwieberdingen (DE)
(86) Internationale Anmeldenummer: PCT/EP2018/053543
(87) Internationale Veröffentlichungsnummer: WO 2018/162186

(56) Entgegenhaltungen:
- DE-A1-102005 051 508
- DE-A1-102014 210 700
- DE-A1-102014 213 025
- JP-A- H08 130 845
- US-A- 3 027 475
- US-A- 5 063 319

## Beschreibung

### Technisches Gebiet

Die Erfindung betrifft eine elektrische Maschine mit einem Stator und einer Endplatte zur Befestigung an einer Stirnseite des Stators, wobei der Stator mindestens eine Statorspule aufweist. Die elektrische Maschine kann dabei insbesondere als ein Universalmotor oder ein andersartiger Gleich- oder Wechselstrommotor ausgebildet sein und beispielsweise als (Hilfs-)Antrieb einer elektromechanischen Werkzeugmaschine zum Einsatz kommen.

### Stand der Technik

Es sind beispielsweise elektrische Maschinen der genannten Art bekannt, die als Antriebsmotoren handgeführter Elektrowerkzeuge dienen und als Wechselstrom-Kommutatormotoren ausgebildet sind. Solche Elektromotoren weisen oft einen geschlossenen Stator auf, der ein Blechpaket aus mehreren einzeln isolierten Blechlamellen darstellt. An einer oder beiden Stirnseiten des Stators kann mindestens eine Endplatte vorgesehen sein, die auch als Endlamelle oder Abstandshalter bekannt und meist aus Kunststoff gefertigt ist.

Bekannte Endplatten dieser Art erfüllen typischerweise eine oder mehrere der folgenden Funktionen: Sichern eines Festsitzes einer Statorspule im Polschuh, Einhaltung geforderter gesetzlicher Mindestabstände zwischen diversen elektromagnetischen Komponenten des Elektromotors, Beabstandung diverser Statorkomponenten voneinander zu deren Kühlung, Wickelunterstützung und Einhaltung vorbestimmter maximaler Wicklungsabmessungen einer Statorspule oder Lagerung eines relativ zum Stator beweglichen Läufers, insbesondere drehbaren Rotors, des Elektromotors.

Einige der bekannten Endplatten weisen ferner elektrische Anschlüsse zum Herstellen einer Steckverbindung mit den Kontaktierungsdrähten einer Statorspule auf. In diesem Fall enden die Kontaktierungsdrähte der Statorspule also in einem in der Endplatte fest integrierten Stecker. Bei anderen bekannten Elektromotoren sind die Kontaktierungsdrähte der Statorspulen hingegen nicht an den Endplatten des Stators, sondern beispielsweise beim weiteren Verlauf eines jeweiligen Anschlussdrahts in einem Motorgehäuse an darin extra vorgesehenen Drahtfixierungseinrichtungen befestigt.

Die US 3 027 475 A offenbart ein Isolationselement für Spulen in einer Stator-Kern- und Spulenanordnung einer dynamoelektrischen Maschine. Spezifisch werden Endstifte eines Isolationselements beschrieben, die als hohle rohrförmige Hohlkörper zum Aufnehmen der Endabschnitte zugehöriger Spulendrahtwicklungen in deren Innerem und zum Führen dieser Endabschnitte zu einer Position vorgesehen sind, von der aus sie sich frei ohne Gefahr einer Kontaktierung des Kerns oder der Spulen erstrecken können. Die Endstifte sind dabei auch zum Befestigen der Endabschnitte der Spulen in einer Weise ausgebildet, die eine Spulenverschiebung durch Übertragung von Zugkräften von den Endabschnitten auf die Spulenkörper verhindern soll. Hierzu zeigt die Druckschrift einen radial kreisförmigen Anschlag zur Begrenzung einer oder mehrerer Drahtwindungen vor dem Eintritt des Endabschnitts in die innere Bohrung des hohlen Endstifts. Ferner kann der Endstift einen longitudinalen Durchgangsschlitz aufweisen, der zur Dehnbarkeit des Hohlkörpers und zum vereinfachten Einführen des Drahts in die Bohrung dienen kann. In einem modifizierten Beispiel ist der Endstift nicht durchgehend hohl, sondern weist eine distale Sacklochbohrung zum Aufnehmen eines freien Drahtendes nach Bildung einer Endschleife auf. Entsprechend ist der radiale Anschlag durch eine rechteckige Einkerbung ersetzt, die den Draht ähnlich dem Anschlag in der longitudinalen Richtung des Endstifts begrenzt.

Ferner offenbart die US 5 063 319 A einen Universal-Elektromotor zum Betrieb in einem Antriebsmodus und einem Bremsmodus, der hierzu einen Anker, eine Stator-Baugruppe, eine erste und zweite Antriebs-Erregerwicklungen sowie eine erste und zweite bremsende Hilfs-Erregerwicklungen, die jeweils in die Stator-Baugruppe eingefügt sind. Spezifisch offenbart die Druckschrift Kunststoff-Endringe, zwischen denen ein gelechter Eisenkern eingeordnet ist. Dabei ist die jeweilige Endleitung der Erregerwicklungen in den Anschluss des Kunststoff-Endrings eingedrückt, der in eine Anschlussbuchse eines Bolzens eingeführt ist.

Die Druckschrift DE 10 2005 051508 A1 zeigt einen Elektromotor umfassend einen Stator und dessen Spulenwicklungen, wobei die Verschaltung der Spulenwicklungen an einer Endscheibe, insbesondere des Stator-Blechpakets, ausführbar ist.

Aus der DE 10 2014 210700 A1 und der DE 10 2014 213025 gehen jeweils elektrische Maschinen hervor, deren Statoren eine Endplatte mit einer Mehrzahl von Umlenkhilfeeinrichtungen zum definierten Führen eines Kontaktierungsdrahts aufweisen. Zum Aufnehmen des Kontaktierungsdrahts weist jede Umlenkhilfeeinrichtung eine Führungsnut auf, die drei längliche Führungsabschnitte umfasst. Jeder Führungsabschnitt ist dazu ausgebildet, den Kontaktierungsdraht in mindestens einer zur Führungsabschnittserstreckung senkrechten Richtung zu begrenzen, sodass der Kontaktierungsdraht beim Übergang zwischen diesen Führungsnuten jeweils umgelenkt wird.

Es ist Aufgabe der Erfindung, eine elektrische Maschine mit einer verbesserten Endplatte für deren Stator anzugeben, wobei die Endplatte die mechanische Stabilität einer Statorspulenwicklung und/oder von deren Anschlussdrähten innerhalb der elektrischen Maschine erhöht und zugleich etwaige mit der Statorspulenwicklung und/oder deren Anschlussdrähten verbundene räumliche und/oder elektrische Verluste innerhalb der elektrischen Maschine reduziert werden können.

### Offenbarung der Erfindung

Zur Lösung der gestellten Aufgabe ist gemäß Anspruch 1 vorgesehen, dass mindestens eine der Umlenkhilfeeinrichtungen einen Vorsprung darstellt, der sich in einem am Stator befestigten Zustand der Endplatte von der Stirnseite des Stators weg, insbesondere im Wesentlichen senkrecht zu dieser, erstreckt und/oder dessen Abmessungen derart schlank und/oder kompakt sind, dass der ganze Vorsprung oder zumindest ein Teil davon zusammen mit dem am und/oder im Vorsprung mehrfach umgelenkten Kontaktierungsdraht von einem stabilisierenden Schrumpfschlauch umhüllbar ist. So kann bei einer Umlenkhilfeeinrichtung in Form eines Vorsprungs der Kontaktierungsdraht in einer definierten Weise um den Vorsprung herumgeführt werden und bereits dadurch ein- oder mehrfach umgelenkt werden. Durch einen schlank ausgebildeten Vorsprung kann beispielsweise auch eine Ausgangsrichtung des Kontaktierungsdrahts beziehungsweise des damit verbundenen Anschlussdrahts definiert werden, was insbesondere mittels des stabilisierenden (und elektrisch isolierenden) Schrumpfschlauchs zusätzlich unterstützt werden kann.

Die elektrische Maschine und/oder deren Stator können dabei beispielsweise wie eingangs ausführlich dargelegt ausgebildet sein. Die elektrische Maschine kann insbesondere einen Universalmotor für eine Werkzeugmaschine, wie beispielsweise einen Winkelschleifer oder Bohrhämmer, darstellen. Insbesondere kann es sich vorliegend um einen geschlossenen Stator handeln, was jedoch keine zwingende Voraussetzung ist. Die Stirnseite des Stators, an der die Endplatte zu befestigen ist, kann insbesondere eine Statorseite sein, die transversal oder im Wesentlichen senkrecht zum relativ zum Stator beweglichen Läufer, insbesondere drehbaren Rotor, der elektrischen Maschine angeordnet ist. Hier und nachfolgend können unter "im Wesentlichen" insbesondere eine herstellungs- oder konstruktionsbedingte mögliche Abweichung von bis zu etwa 10% von betreffenden Abmessungen verstanden werden.

Durch das definierte Führen und das daraus resultierende mehrfache Umlenken des Kontaktierungsdrahts der Statorspule an und/oder in der Umlenkhilfeeinrichtung der Endplatte kann der Kontaktierungsdraht an der Umlenkhilfeeinrichtung exakt positioniert oder entgegen vorbestimmten Zugkräften fixiert werden. Dies kann die mechanische Stabilität der Statorspulenwicklung auf der einen Seite und eines zum Kontaktierungsdrahtführenden Anschlussdrahts auf der anderen Seite deutlich erhöhen, sodass insbesondere keine weiteren Fixierungsmaßnahmen wie oben erwähnte Endplattenstecker oder zusätzliche Drahtfixierungseinrichtungen in einem Maschinengehäuse benötigt werden.

Insbesondere im Gegensatz zu einem Endplattenstecker ist die hierin dargelegte Positionierung oder Fixierung des Kontaktierungsdrahts an der Umlenkhilfeeinrichtung wieder lösbar und genauso gut wieder herstellbar. Dies ermöglicht eine jederzeit schnelle und einfache Korrektur, Wartung und Auswechslung der Statorspulenwicklung, die weder besondere Werkzeuge noch Fachkenntnisse erfordert. Ferner können durch eine kompakte Umlenkhilfeeinrichtung mit entsprechend kurzer Kontaktierungsdrahtlänge besonders im Vergleich zu einem Endplattenstecker elektrische Verluste deutlich reduziert werden.

Durch eine geeignete Ausgestaltung und Anordnung der jeweiligen Umlenkhilfeeinrichtung an der Endplatte kann die Positionierung oder Fixierung des Kontaktierungsdrahts weitgehend flexibel an Anforderungen einer spezifischen Anwendung angepasst werden und insbesondere auch besonders sparsam im Hinblick auf den benötigten Raum und die benötigte Drahtlänge sein. Einige Beispiele hierzu werden nachfolgend angegeben.

Die Endplatte kann beispielsweise aus Kunststoff oder einem anderen elektrisch und/oder thermisch isolierenden Material gefertigt sein. Bei Bedarf können aber auch Endplatten aus elektrisch und/oder thermisch leitenden Werkstoffen, insbesondere aus Metall, zum Einsatz kommen. Es können neben einer einzigen auch zwei oder mehr Endplatten der hierin dargelegten Art an einer Stirnseite des Stators befestigbar sein, beispielsweise je eine Endplatte pro Statorspule.

Insbesondere kann die Endplatte eine oder mehrere der folgenden Funktionen erfüllen: Sichern eines Festsitzes einer Statorspule im Stator-Polschuh, Einhaltung geforderter gesetzlicher Mindestabstände zwischen diversen elektromagnetischen Komponenten der elektrischen Maschine, Beabstandung diverser Statorkomponenten, wie Blechpaket und Statorspulenwicklung, voneinander zu deren Kühlung, Wickelunterstützung und Einhaltung vorbestimmter maximaler Wicklungsabmessungen einer Statorspule oder Lagerung des Läufers oder Rotors.

Weitere Ausführungsformen sind in den abhängigen Ansprüchen angegeben. Alle in den Ansprüchen und der Beschreibung für die Endplatte genannten weiterführenden Merkmale und Wirkungen gelten auch in Bezug auf den Stator, und umgekehrt.

Insbesondere kann mindestens eine der Umlenkhilfeeinrichtungen derart ausgebildet sein, dass sie den Kontaktierungsdraht in einer zur Stirnseite des Stators transversalen, insbesondere im Wesentlichen senkrechten Zugrichtung positioniert oder entgegen einer vorbestimmten Zugkraft vom Stator weg fixiert. Alternativ oder zusätzlich kann mindestens eine der Umlenkhilfeeinrichtungen derart ausgebildet sein, dass sie den Kontaktierungsdraht in einer, zwei, drei oder allen bezüglich der Stirnseite des Stators lateralen, insbesondere im Wesentlichen parallelen, Zugrichtungen positioniert oder entgegen einer vorbestimmten Zugkraft fixiert. Beispiele verschiedenartiger Konstruktionsvarianten der Umlenkhilfeeinrichtungen, welche die genannte Funktionalität ergeben, werden weiter unten angegeben.

Bei einer Weiterbildung dieser Ausführungsform umfasst die Führungsausnehmung
- mindestens einen länglichen Führungsabschnitt, der sich schräg oder im Wesentlichen parallel zur Stirnseite des Stators erstreckt, und/oder
- mindestens einen länglichen Führungsabschnitt, der sich transversal oder im Wesentlichen senkrecht zur Stirnseite des Stators erstreckt.

Dabei ist der jeweilige Führungsabschnitt dazu ausgebildet, den Kontaktierungsdraht in mindestens einer zur Führungsabschnittserstreckung senkrechten Richtung zu begrenzen und dadurch zu positionieren oder zu fixieren. Eine Begrenzung in nur einer Richtung ist beispielsweise bei einem stufenförmigen Führungsabschnitt gegeben. Eine Begrenzung in zwei Richtungen kann insbesondere durch eine Führungsnut realisiert sein, während eine Bohrung den darin geführten Draht in allen zu einer Bohrachse senkrechten Richtungen begrenzt. Ein länglicher Führungsabschnitt kann insbesondere im Wesentlichen gerade sein.

Bei einer alternativen oder zusätzlichen Weiterbildung der obigen Ausführungsform umfasst die Führungsausnehmung zwei, drei oder mehr längliche und insbesondere miteinander verbundene Führungsabschnitte mit voneinander verschiedenen Erstreckungsrichtungen. Dabei ist auch hier der jeweilige Führungsabschnitt dazu ausgebildet, den Kontaktierungsdraht in mindestens einer zur Führungsabschnittserstreckung senkrechten Richtung zu begrenzen, sodass der Kontaktierungsdraht beim Übergang zwischen den Führungsabschnitten mit unterschiedlichen Erstreckungsrichtungen jeweils umgelenkt wird. Auch hier kann ein länglicher Führungsabschnitt insbesondere im Wesentlichen gerade sein.

In spezifischen Ausgestaltungen kann die Endplatte drei, vier oder mehr von den Umlenkhilfeeinrichtungen, insbesondere jeweils eine Umlenkhilfeeinrichtung für einen Kontaktierungsdraht einer jeden Statorspule, aufweisen. Die Umlenkhilfeeinrichtungen können untereinander gleich oder auch voneinander verschieden ausgebildet sein. Beispielsweise können die Umlenkhilfeeinrichtungen für den Kontaktierungsdraht einer Statorspule unterschiedlich ausgebildet sein, wenn der Kontaktierungsdraht unterschiedlichen Anforderungen an deren Positionierung oder Fixierung an der Endplatte unterliegen.

Es kann vorgesehen sein, dass die Abmessungen der Endplatte derart sind, dass durch die Endplatte mindestens ein vorbestimmter Mindestabstand zwischen einer Statorspule und einem magnetischen Statormaterial und/oder zwischen einer Statorspule und einem Läufer, insbesondere Rotor, der elektrischen Maschine und/oder zwischen mehreren Statorspulen eingehalten wird.

Ferner kann die Endplatte insbesondere mindestens eine Wickelhilfeeinrichtung, beispielsweise in Form eines Statorspulenkörpers, zur Unterstützung eines Wickelvorgangs und/oder zum Halten einer Statorspule am Stator und/oder zur Einhaltung einer vorbestimmten maximalen und/oder einer vorbestimmten minimalen Statorspulen-Wicklungsabmessung aufweisen.

### Kurzbeschreibung der Zeichnungen

Ausführungsformen werden nachfolgend anhand der in beigefügten Zeichnungen dargestellten Beispiele näher erläutert. Die Zeichnungen sind rein schematisch, sie sind insbesondere nicht als maßstabsgetreu zu lesen. Gleiche oder aber ähnliche Elemente sind mit gleichen Bezugszeichen gekennzeichnet. Es zeigen:
- Figur 1a: eine Draufsicht auf eine Endplatte mit vier Umlenkhilfeeinrichtungen;
- Figur 1b: eine perspektivische Seitenansicht der Endplatte der Fig. 1a;
- Figuren 2a, 2b, 2c: drei verschiedene perspektivische Seitenansichten eines vergrößerten Ausschnitts der Endplatte der Figuren 1a und 1b mit einer einzelnen Umlenkhilfeeinrichtung;
- Figur 3: einen Stator eines Universalmotors mit einer an dessen Stirnseite befestigten Endplatte der Figuren 1a und 1b;
- Figur 4: eine Draufsicht auf einen Stator eines in einem Motorgehäuse untergebrachten Universalmotors mit einer an dessen Stirnseite befestigten Endplatte der Figuren 1a und 1b;
- Figur 5a: eine perspektivische Seitenansicht eines Ausschnitts eines Motorgehäuseinneren des Universalmotors der Figur 4 mit einem Anschlussdraht zwischen einer Statorspule und einem Kommutatorgehäuse;
- Figur 5b: eine perspektivische Seitenansicht eines weiteren Ausschnitts des Motorgehäuseinneren des Universalmotors der Figur 4 mit einem Anschlussdraht einer weiteren Statorspule; und
- Figur 5c: eine perspektivische Seitenansicht eines dritten Ausschnitts des Motorgehäuseinneren des Universalmotors der Figur 4 mit einem weiteren Anschlussdraht einer der Statorspulen.

### Beschreibung von Ausführungsformen

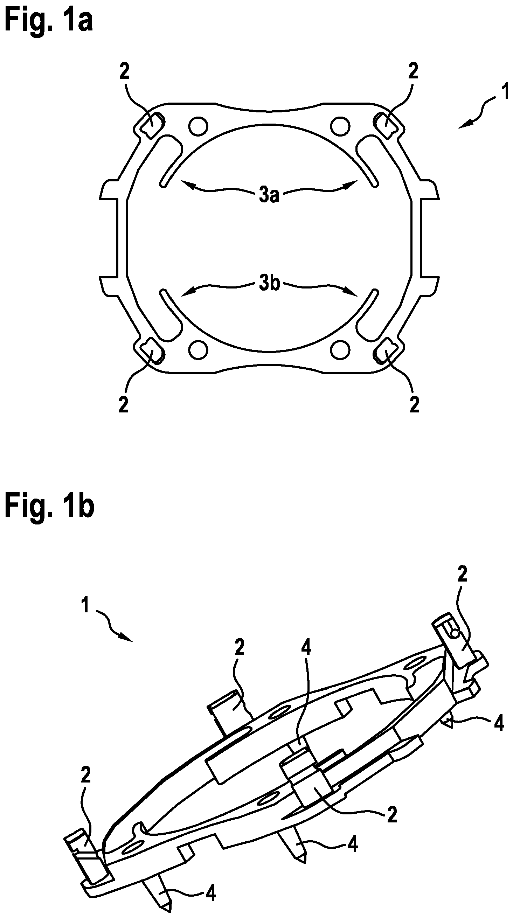

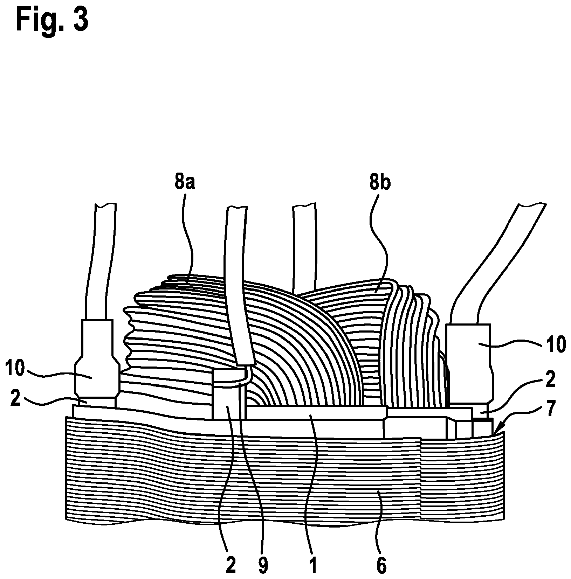

Figur 1a zeigt schematisch eine Oberseite einer Endplatte 1 der hierin dargelegten Art mit vier rein beispielhaft identisch ausgebildeten Umlenkhilfeeinrichtungen 2. Die Endplatte 1 hat in diesem Beispiel eine ringähnliche Form. Sie ist zur Befestigung an einer Stirnseite eines geschlossenen Stators (in Fig. 3 gezeigt) mit zwei Statorspulen ausgebildet und weist an zwei gegenüberliegenden Innenseiten des Rings Wickelhilfeeinrichtungen 3a und 3b auf, die als Statorspulenkörper für die beiden Statorspulen dienen und den Wickelvorgang unterstützen können.

Figur 1b zeigt eine schematische perspektivische Seitenansicht der Endplatte 1 aus der Figur 1a. An der in Fig. 1b erkennbaren Unterseite der Endplatte 1 sind rein beispielhaft vier Befestigungsvorsprünge 4 zur Befestigung der Endplatte 1 mit ihrer Unterseite an der Stirnseite des Stators vorgesehen. Die Umlenkhilfeeinrichtungen 2 auf der Oberseite der Endplatte 1 stellen in Fig. 1b erkennbare Vorsprünge dar, die sich von der Oberseite der Endplatte 1 im Wesentlichen senkrecht dazu und damit auch zur Stirnseite des Stators erstrecken.

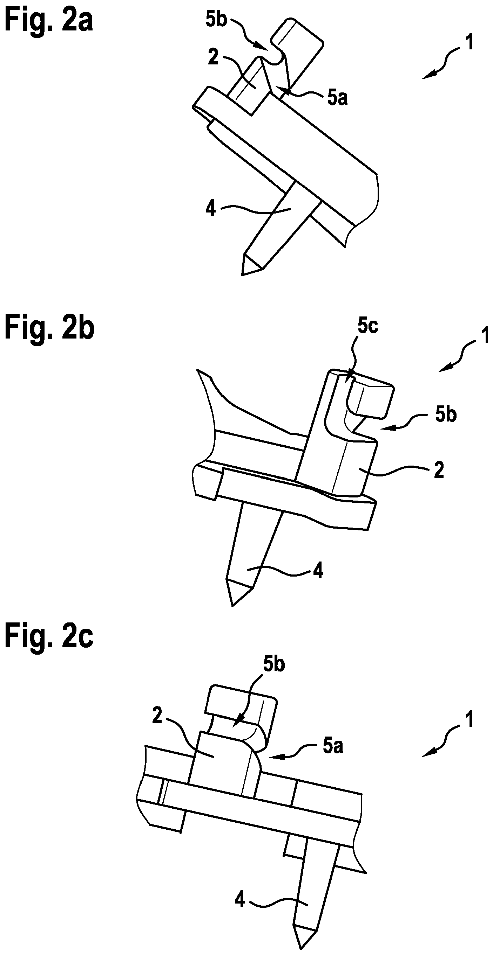

In den Figuren 2a, 2b und 2c ist ein Ausschnitt der Endplatte 1 aus den Figuren 1a und 1b mit einer einzelnen Umlenkhilfeeinrichtung 2 in drei verschiedenen perspektivischen Seitenansichten vergrößert dargestellt. In diesem Beispiel weist die Umlenkhilfeeinrichtung 2 zum definierten Führen eines Kontaktierungsdrahts einer Statorspule eine Führungsausnehmung in Form einer Führungsnut zum Aufnehmen des Kontaktierungsdrahts auf.

So ist in Fig. 2a ein erster länglicher, rein beispielhaft gerader Führungsabschnitt 5a der Führungsausnehmung zu sehen, der sich schräg zur Unterseite der Endplatte 1 und damit auch zur Stirnseite des Stators erstreckt. Der erste Führungsabschnitt 5a geht in einen an einer anderen Seite der Umlenkhilfeeinrichtung 2 verlaufenden zweiten länglichen, geraden Führungsabschnitt 5b über, der sich im Wesentlichen parallel zur Unterseite der Endplatte 1 und damit auch zur Stirnseite des Stators erstreckt. Dieser zweite Führungsabschnitt 5b ist in Fig. 2a nur als Ausnehmung zu erkennen und in Figuren 2b und 2c deutlich zu sehen.

Wie schließlich in Fig. 2b zu sehen ist, geht der zweite Führungsabschnitt 5b in einen an einer dritten Seite der Umlenkhilfeeinrichtung 2 verlaufenden dritten länglichen, geraden Führungsabschnitt 5c über, der sich im Wesentlichen senkrecht zur Unterseite der Endplatte 1 und damit auch zur Stirnseite des Stators erstreckt. Durch diese drei voneinander verschiedenen Erstreckungsrichtungen der Führungsabschnitte 5a, 5b und 5c der Führungsnut wird der Kontaktierungsdraht an der Umlenkhilfeeinrichtung 2 bei den Übergängen zwischen den jeweiligen Führungsabschnitten insgesamt mindestens zweimal umgelenkt, wie es in Figur 3 zu erkennen ist.

Fig. 3 zeigt ein Beispiel eines Stators 6 einer elektrischen Maschine, insbesondere eines Universalmotors für eine elektrisch angetriebene Werkzeugmaschine, mit einer an einer Stirnseite 7 des Stators 6 befestigten Endplatte 1 aus den Figuren 1a-1b und 2a-2c. Es handelt sich in diesem Beispiel um einen geschlossenen Stator 6 mit in Fig. 3 erkennbaren einzelnen Blechlamellen des Statorblechpakets.

Ferner sind in Fig. 3 Wicklungen der beiden Statorspulen 8a und 8b zu sehen. Ein Kontaktierungsdraht9 der Statorspule 8a ist, wie in der Figur deutlich zu sehen ist, in einer definierten Weise in der Führungsnut um eine der Umlenkhilfeeinrichtungen 2 geführt und dadurch mindestens zweifach umgelenkt und präzise an der Umlenkhilfeeinrichtung 2 positioniert und in diesem Beispiel entgegen in jeder Richtung vom Stator 6 weg wirkenden Zugkräften fixiert.

Aufgrund schlanker und kompakter Abmessungen des Vorsprungs, der in diesem Beispiel die jeweilige Umlenkhilfeeinrichtung 2 darstellt, kann der ganze Vorsprung zusammen mit dem daran mindestens zweifach umgelenkten Kontaktierungsdraht von einem stabilisierenden Schrumpfschlauch 10 umhüllt werden. Dies ist in Figur 3 an zwei der vier Umlenkhilfeeinrichtungen 2 der Endplatte 1 gezeigt.

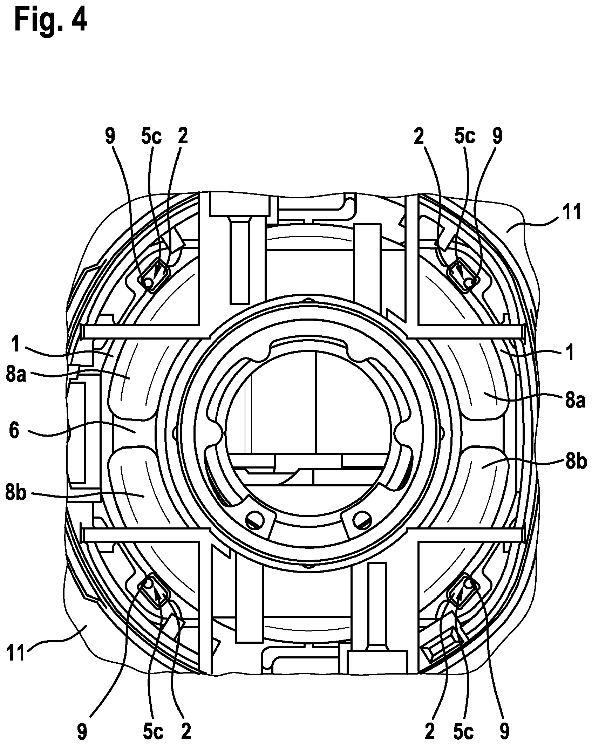

Fig. 4 zeigt ein schematisches Beispiel einer Draufsicht auf einen Stator 6 eines in einem Motorgehäuse 11 untergebrachten Universalmotors mit einer an dessen Stirnseite (nicht gezeigt) befestigten Endplatte 1 der hierin dargelegten Art, die insbesondere wie in den Figuren 1a und 1b ausgebildet sein kann. Kontaktierungsdrähte 9 der zwei Statorspulen 8a und 8b können dabei, beispielsweise wie oben in Bezug auf Figuren 2a-2c und 3 beschrieben, an vier Umlenkhilfeeinrichtungen 2 der Endplatte 1 positioniert oder fixiert sein. In Fig. 4 ist das definierte Führen des jeweiligen Kontaktierungsdrahts 9 durch eine Führungsausnehmung 5c der jeweiligen Umlenkhilfeeinrichtung 2 erkennbar, die insbesondere dem dritten, zur Oberseite der Endplatte 1 senkrechten Führungsabschnitt 5c der Führungsnut gemäß den Figuren 1b und 2b entsprechen kann.

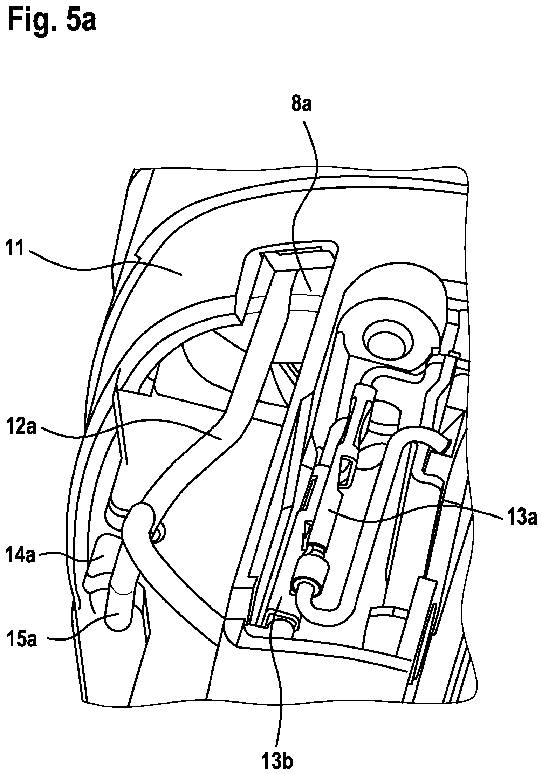

Fig. 5a zeigt in einer vergrößerten Darstellung eine perspektivische Seitenansicht eines Ausschnitts eines Motorgehäuseinneren des Universalmotors aus der Figur 4 mit einem Anschlussdraht 12a, der von einem Kontaktierungsdraht der Statorspule 8a zu einem Kommutatorgehäuse (nicht dargestellt) führt. Vor dem Eingang ins Kommutatorgehäuse sind rein beispielhaft zwei Steckverbinder 13a und 13b für den Anschlussdraht 12a vorgesehen. Auf dem Weg von der Statorspule 8a zu den Steckverbindern 13a und 13b ist im Motorgehäuse 11 ferner eine Drahtfixierungseinrichtung 14a in Form eines Stegs vorgesehen, an welchem der Anschlussdraht 12a insbesondere zu einer Zugentlastung des zugehörigen Kontaktierungsdrahts 9 an der Statorspule 8a eine Schleife 15a bildet.

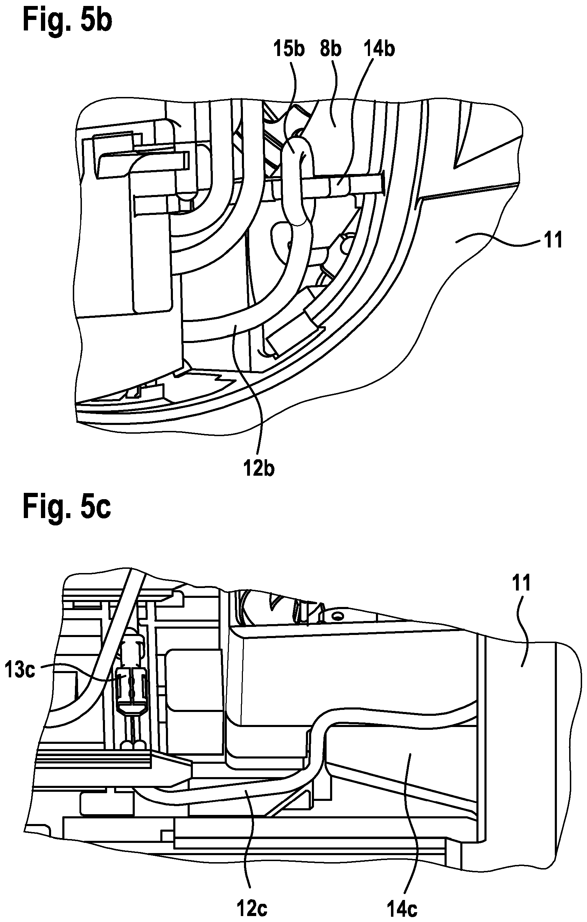

Fig. 5b zeigt eine vergrößerte perspektivische Seitenansicht eines weiteren Ausschnitts des Motorgehäuseinneren des Universalmotors der Figur 4 mit einem Anschlussdraht 12b der Statorspule 8b. Auch hier ist im Motorgehäuse 11 eine Drahtfixierungseinrichtung 14b in Form eines Stegs vorgesehen, an welchem der Anschlussdraht 12b insbesondere zu einer Zugentlastung des zugehörigen Kontaktierungsdrahts 9 an der Statorspule 8b eine Schleife 15b bildet.

Fig. 5c zeigt eine vergrößerte perspektivische Seitenansicht eines dritten Ausschnitts des Motorgehäuseinneren des Universalmotors der Figur 4 mit einem weiteren Anschlussdraht 12c der Statorspule 8a oder 8b (nicht gezeigt). Auf dem Weg zu einem Außenanschlussstecker 13c wird auch der Anschlussdraht 12c mittels einer Drahtfixierungseinrichtung 14c im Motorgehäuse 11 zusätzlich fixiert und zugentlastet.

Die in den Figuren 5a-5c gezeigten herkömmlichen Maßnahmen zur Fixierung und Zugentlastung der Anschlussdrähte 12a-12c der Statorspulen 8a und 8b mittels der im Motorgehäuse 11 eigens hierzu vorgesehenen Drahtfixierungseinrichtungen 14a-14c können vorliegend aufgrund der zuverlässigen Positionierung und Fixierung der Kontaktierungsdrähte9 der Statorspulen 8a und 8b an der Umlenkhilfeeinrichtungen 2 der hierin dargelegten Endplatte 1 auch weggelassen werden. Dadurch kann insbesondere eine Einsparung der Drahtlänge der Anschlussdrähte 12a-12c und/oder des Motorgehäuseinnenraums erzielt werden, was wiederum zu einer Reduzierung von damit verbundenen räumlichen und elektrischen Verlusten führen kann.

## Patentansprüche

1. Elektrische Maschine, insbesondere Universalmotor, mit einem Stator (6) und einer Endplatte (1) zur Befestigung an einer Stirnseite (7) des Stators (6), wobei die Endplatte (1)
- zu einer lösbaren Positionierung oder Fixierung eines Kontaktierungsdrahts (9) einer Statorspule (8a, 8b) mindestens zwei Umlenkhilfeeinrichtungen (2) aufweist, die dazu ausgebildet sind, den Kontaktierungsdraht (9) so definiert zu führen, dass dieser an und/oder in den Umlenkhilfeeinrichtungen (2) mehrfach umgelenkt und dadurch an diesen positioniert oder fixiert wird,
- wobei mindestens eine der Umlenkhilfeeinrichtungen (2) zum definierten Führen des Kontaktierungsdrahts (9) eine Führungsausnehmung, insbesondere eine Führungsnut, zum Aufnehmen des Kontaktierungsdrahts (9) aufweist und diese Führungsausnehmung drei oder mehr längliche Führungsabschnitte (5a, 5b, 5c) mit voneinander verschiedenen Erstreckungsrichtungen umfasst und der jeweilige Führungsabschnitt (5a, 5b, 5c) dazu ausgebildet ist, den Kontaktierungsdraht (9) in mindestens einer zur Führungsabschnittserstreckung senkrechten Richtung zu begrenzen, sodass der Kontaktierungsdraht (9) beim Übergang zwischen diesen Führungsabschnitten (5a, 5b, 5c) jeweils umgelenkt wird,
**dadurch gekennzeichnet, dass** mindestens eine der Umlenkhilfeeinrichtungen (2) einen Vorsprung darstellt, wobei die ganze Umlenkhilfeeinrichtung in Form eines Vorsprungs ausgebildet ist,
- der sich in einem am Stator (6) befestigten Zustand der Endplatte (1) von der Stirnseite (7) des Stators (6) weg, insbesondere im Wesentlichen senkrecht zu dieser, erstreckt und/oder
- dessen Abmessungen derart schlank und/oder kompakt sind, dass der ganze Vorsprung oder zumindest ein Teil davon zusammen mit dem am und/oder im Vorsprung mehrfach umgelenkten Kontaktierungsdraht (9) von einem stabilisierenden Schrumpfschlauch (10) umhüllbar ist.

2. Elektrische Maschine nach Anspruch 1, wobei mindestens eine der Umlenkhilfeeinrichtungen (2) derart ausgebildet ist, dass sie den Kontaktierungsdraht (9) in einer zur Stirnseite (7) des Stators (6) transversalen, insbesondere im Wesentlichen senkrechten Zugrichtung positioniert oder entgegen einer vorbestimmten Zugkraft vom Stator (6) weg fixiert.

3. Elektrische Maschine nach einem der vorhergehenden Ansprüche, wobei mindestens eine der Umlenkhilfeeinrichtungen (2) derart ausgebildet ist, dass sie den Kontaktierungsdraht (9) in einer, zwei, drei oder allen bezüglich der Stirnseite (7) des Stators (6) lateralen, insbesondere im Wesentlichen parallelen, Zugrichtungen positioniert oder entgegen einer vorbestimmten Zugkraft fixiert.

4. Elektrische Maschine nach einem der vorhergehenden Ansprüche, wobei die Führungsausnehmung
- mindestens einen länglichen Führungsabschnitt (5a, 5b) umfasst, der sich schräg oder im Wesentlichen parallel zur Stirnseite (7) des Stators (6) erstreckt, und/oder
- mindestens einen länglichen Führungsabschnitt (5c) umfasst, der sich transversal oder im Wesentlichen senkrecht zur Stirnseite (7) des Stators (6) erstreckt,
- wobei der jeweilige Führungsabschnitt (5a, 5b, 5c) dazu ausgebildet ist, den Kontaktierungsdraht (9) in mindestens einer zur Führungsabschnittserstreckung senkrechten Richtung zu begrenzen und dadurch zu positionieren oder zu fixieren.

5. Elektrische Maschine nach einem der vorhergehenden Ansprüche, die drei, vier oder mehr von den Umlenkhilfeeinrichtungen (2), insbesondere jeweils eine Umlenkhilfeeinrichtung (2) für einen Kontaktierungsdraht (9) einer jeden Statorspule (8a, 8b), aufweist.

6. Elektrische Maschine nach einem der vorhergehenden Ansprüche, deren Abmessungen derart sind, dass durch die Endplatte (1) mindestens ein vorbestimmter Mindestabstand zwischen einer Statorspule (8a, 8b) und einem magnetischen Statormaterial und/oder zwischen einer Statorspule (8a, 8b) und einem Läufer, insbesondere Rotor, der elektrischen Maschine und/oder zwischen mehreren Statorspulen (8a, 8b) eingehalten wird.

7. Elektrische Maschine nach einem der vorhergehenden Ansprüche, die ferner mindestens eine Wickelhilfeeinrichtung (3a, 3b), insbesondere in Form eines Statorspulenkörpers, zur Unterstützung eines Wickelvorgangs und/oder zum Halten einer Statorspule (8a, 8b) am Stator (6) und/oder zur Einhaltung einer vorbestimmten maximalen und/oder einer vorbestimmten minimalen Statorspulen-Wicklungsabmessung aufweist.

## Claims

1. Electric machine, in particular universal motor, having a stator (6) and an end plate (1) for fastening to an end face (7) of the stator (6), wherein the end plate (1)
- for releasably positioning or fixing a contacting wire (9) of a stator coil (8a, 8b) has at least two deflecting assistance devices (2) which are designed to guide the contacting wire (9) in such a manner that the latter is multiply deflected at and/or in the deflecting assistance devices (2) and is thereby positioned or fixed thereon,
- wherein at least one of the deflecting assistance devices (2) has, for the defined guidance of the contacting wire (9), a guide recess, in particular a guide groove, for receiving the contacting wire (9), and said guide recess comprises three or more elongate guide portions (5a, 5b, 5c) having directions of extent differing from one another, and the respective guide portion (5a, 5b, 5c) is designed to limit the contacting wire (9) in at least one direction perpendicular to the guide portion extent such that the contacting wire (9) is in each case deflected at the transition between said guide portions (5a, 5b, 5c),
**characterized in that** at least one of the deflecting assistance devices (2) is a protrusion, the entire deflecting assistance device being designed in the form of a protrusion
- which, in a state of the end plate (1) fastened to the stator (6), extends away from the end face (7) of the stator (6), in particular substantially perpendicularly thereto, and/or
- the dimensions of which are slender and/or compact in such a manner that the entire protrusion or at least part thereof together with the contacting wire (9), which is multiply deflected at and/or in the protrusion, can be encased by a stabilizing shrinkage sleeve (10).

2. Electric machine according to Claim 1, wherein at least one of the deflecting assistance devices (2) is designed in such a manner that it positions the contacting wire (9) in an in particular substantially perpendicular tensioning direction which is transverse with respect to the end face (7) of the stator (6), or counter to a predetermined tensile force away from the stator (6).

3. Electric machine according to either of the preceding claims, wherein at least one of the deflecting assistance devices (2) is designed in such a manner that it positions the contacting wire (9) in one, two, three or all tensioning directions which are lateral, in particular substantially parallel, with respect to the end face (7) of the stator (6), or fixes same counter to a predetermined tensile force.

4. Electric machine according to one of the preceding claims, wherein the guide recess
- comprises at least one elongate guide portion (5a, 5b) which extends obliquely or substantially parallel to the end face (7) of the stator (6), and/or
- comprises at least one elongate guide portion (5c) which extends transversely or substantially perpendicularly to the end face (7) of the stator (6),
- wherein the respective guide portion (5a, 5b, 5c) is designed to restrict, and thereby to position or to fix, the contacting wire (9) in at least one direction perpendicular to the guide portion extent.

5. Electric machine according to one of the preceding claims, which has three, four or more of the deflecting assistance devices (2), in particular a respective deflecting assistance device (2) for a contacting wire (9) of each stator coil (8a, 8b).

6. Electric machine according to one of the preceding claims, the dimensions of which are such that at least one predetermined minimum distance between a stator coil (8a, 8b) and a magnetic stator material and/or between a stator coil (8a, 8b) and a rotating component, in particular rotor, of the electric machine and/or between a plurality of stator coils (8a, 8b) is maintained by the end plate (1).

7. Electric machine according to one of the preceding claims, which furthermore has at least one winding assistance device (3a, 3b), in particular in the form of a stator coil body, for assisting a winding process and/or for holding a stator coil (8a, 8b) on the stator (6) and/or for maintaining a predetermined maximum and/or a predetermined minimum stator coil winding dimension.

## Revendications

1. Machine électrique, notamment moteur universel, avec un stator (6) et une plaque d'extrémité (1) pour la fixation sur un côté frontal (7) du stator (6), la plaque d'extrémité (1) présentant
- pour un positionnement ou une fixation détachable d'un fil de contact (9) d'une bobine de stator (8a, 8b), au moins deux dispositifs auxiliaires de déviation (2) qui sont configurés pour guider le fil de contact (9) de manière définie de telle sorte que celui-ci est dévié plusieurs fois sur et/ou dans les dispositifs auxiliaires de déviation (2) et est ainsi positionné ou fixé sur ceux-ci,
- au moins l'un des dispositifs auxiliaires de déviation (2) présentant un évidement de guidage pour le guidage défini du fil de contact (9), notamment une rainure de guidage, pour recevoir le fil de contact (9) et cet évidement de guidage comprenant trois ou plus de trois sections de guidage allongées (5a, 5b, 5c) avec des directions d'extension différentes les unes des autres et la section de guidage respective (5a, 5b, 5c) étant configurée pour limiter le fil de contact (9) dans au moins une direction perpendiculaire à l'extension de la section de guidage, de telle sorte que le fil de contact (9) est dévié à chaque fois lors du passage entre ces sections de guidage (5a, 5b, 5c),
**caractérisé en ce qu'**au moins l'un des dispositifs auxiliaires de déviation (2) constitue une saillie, l'ensemble du dispositif auxiliaire de déviation étant configuré sous la forme d'une saillie,
- qui, à un état fixé sur le stator (6) de la plaque d'extrémité (1), s'étend en s'éloignant du côté frontal (7) du stator (6), notamment essentiellement perpendiculairement à celui-ci, et/ou
- dont les dimensions sont si minces et/ou compactes que l'ensemble de la saillie ou au moins une partie de celle-ci peut être enveloppée, conjointement avec le fil de contact (9) dévié plusieurs fois sur et/ou dans la saillie, par une gaine thermorétractable (10) stabilisante.

2. Machine électrique selon la revendication 1, dans laquelle au moins l'un des dispositifs auxiliaires de déviation (2) est configuré de telle sorte qu'il positionne le fil de contact (9) dans une direction de traction transversale au côté frontal (7) du stator (6), notamment essentiellement perpendiculaire, ou le fixe à l'écart du stator (6) à l'encontre d'une force de traction prédéterminée.

3. Machine électrique selon l'une quelconque des revendications précédentes, dans laquelle au moins l'un des dispositifs auxiliaires de déviation (2) est configuré de telle sorte qu'il positionne le fil de contact (9) dans une, deux, trois ou toutes les directions de traction latérales, notamment essentiellement parallèles, par rapport au côté frontal (7) du stator (6) ou le fixe à l'encontre d'une force de traction prédéterminée.

4. Machine électrique selon l'une quelconque des revendications précédentes, dans laquelle l'évidement de guidage
- comprend au moins une section de guidage allongée (5a, 5b) qui s'étend en oblique ou essentiellement parallèlement au côté frontal (7) du stator (6), et/ou
- comprend au moins une section de guidage allongée (5c) qui s'étend transversalement ou essentiellement perpendiculairement au côté frontal (7) du stator (6),
- la section de guidage respective (5a, 5b, 5c) étant configurée pour limiter le fil de contact (9) dans au moins une direction perpendiculaire à l'extension de la section de guidage et ainsi le positionner ci ou le fixer.

5. Machine électrique selon l'une quelconque des revendications précédentes, qui présente trois, quatre ou plus de quatre dispositifs auxiliaires de déviation (2), notamment un dispositif auxiliaire de déviation (2) pour un fil de contact (9) de chaque bobine de stator (8a, 8b).

6. Machine électrique selon l'une quelconque des revendications précédentes, dont les dimensions sont telles que la plaque d'extrémité (1) maintient au moins une distance minimale prédéterminée entre une bobine de stator (8a, 8b) et un matériau de stator magnétique et/ou entre une bobine de stator (8a, 8b) et un induit, notamment un rotor, de la machine électrique et/ou entre plusieurs bobines de stator (8a, 8b).

7. Machine électrique selon l'une quelconque des revendications précédentes, qui présente en outre au moins un dispositif auxiliaire d'enroulement (3a, 3b), notamment sous la forme d'un corps de bobine de stator, pour assister une opération d'enroulement et/ou pour maintenir une bobine de stator (8a, 8b) sur le stator (6) et/ou pour respecter une dimension d'enroulement de bobine de stator maximale prédéterminée et/ou minimale prédéterminée.
